(19) Europäisches Patentamt / European Patent Office / Office européen des brevets

(11) EP 2 846 129 A1

(12) **EUROPEAN PATENT APPLICATION**

(43) Date of publication:
11.03.2015 Bulletin 2015/11

(51) Int Cl.:
*G01B 11/30* (2006.01)

(21) Application number: 13275206.4

(22) Date of filing: 10.09.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
P.O. Box 87
Warwick House
Farnborough Aerospace Centre
Farnborough
Hampshire GU14 6YU (GB)**

(54) **Optical surface roughness measurement**

(57) An optical surface roughness measurement-enabling arrangement and method are disclosed for enabling measurement of the surface roughness of a material. The arrangement comprises an optical radiation source for generating a beam of collimated radiation along a first axis for illuminating the surface of the material with the radiation directed along the first axis, a refractive optical element optically alignable with the beam of radiation for refracting the beam along a second axis which is non-parallel with the first axis, for illuminating the surface of the material with the radiation directed along the second axis and a detector which is arranged to detect the radiation, incident upon the surface along the first axis and second axis, which becomes reflected off the surface of the material. An optical surface roughness measuring arrangement and method are also disclosed for providing a measurement value of the surface roughness.

Figure 2b

**Description**

The present invention relates to optical surface roughness measurement and to an optical surface roughness measurement-enabling arrangement and method for enabling measurement of the surface roughness of a material. The invention further relates to an optical surface roughness measuring arrangement and method of measuring the surface roughness of a material.

It is often necessary to measure the average surface roughness of a material. There are various definitions of surface roughness and a corresponding number of quantitative parameters. Essentially however, the measurement indicates height variations on the surface of the material under inspection and the average of these height variations is indicated by the parameter Ra.

There are a number of methods used for measuring surface roughness of a material. Some involve the use of a stylus that is drawn over the surface of the material with the vertical deflection of the stylus providing a measure of the surface roughness. However with this method, the resolution of the measurement is limited to the dimensions of the stylus and the contact pressure of the stylus on the surface of the material can damage the surface. Other methods involve illuminating the surface with radiation and then analysing the contrast in the resulting speckle that is generated. However, each of these methods only provides a limited measurement range and has a limited resolution.

An alternative method comprises illuminating the surface of a material using a collimated beam of radiation from two slightly different incident angles. The radiation incident upon the surface at the two different incident angles is then correlated to determine the surface roughness and this correlation method is found to provide an extended measurement range compared to the alternatives.

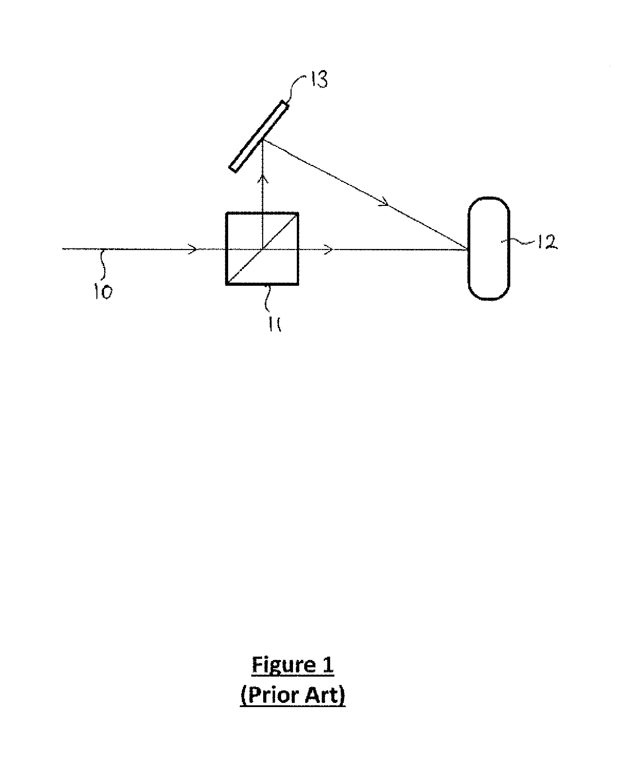

In order to illuminate the material surface at slightly differing incident angles, either the material is rotated or the beam of radiation is deflected. The former is not always practical for measurement of large pieces arranged in-situ. For the latter, and referring to figure 1 of the drawings, the principal approach is to reflect a portion of the beam 10 using a beam-cube beam splitter 11, and to re-direct the reflected beam onto the test piece 12 using a mirror 13. Experimental investigations have shown that the closest agreement between the measured values of surface roughness using the various techniques occurs when the difference in incident angles is of the order of ~1°. However, the physical size of the beam splitter 11 and mirror 13 presents a lower limit on the difference in the incident angles (arising from the lower limit on the physical path length of the reflected beam from the original) of the beams used to illuminate the surface, particularly in a limited space, and thus presents a lower limit to the error which can be achieved when making the measurement of surface roughness.

In accordance with the present invention, as seen from a first aspect, there is provided an optical surface roughness measurement-enabling arrangement for enabling measurement of the surface roughness of a material, the arrangement comprising:

-    an optical radiation source for generating a beam of collimated radiation and directing the beam along a first axis for illuminating the surface of the material;

-    a refractive optical element optically alignable with the beam of radiation for refracting the beam and directing the refracted beam along a second axis which is non-parallel with the first axis, for illuminating the surface of the material;

-    a detector which is arranged to detect the radiation, incident upon the surface along the first axis and second axis, which becomes reflected off the surface of the material.

Advantageously, the refractive optical element removes the lower angular limit between the incident beams of radiation, thereby enabling a measurement of surface roughness comprising a reduced error.

The refractive optical element is formed of a material, such as silica, which is substantially transmissive for the wavelength of the radiation from the radiation source, with the principal losses arising from the Fresnel reflections at the air-element interfaces. In an embodiment, the refractive optical element comprises a front and rear substantially planar optical surface through which the beam of radiation is arranged to pass, the front and rear surface being orientated at an acute angle to each other. The refractive optical element may comprise an optical wedge or more preferably an optical prism.

The optical radiation source preferably comprises a source of laser radiation, such as a diode-pumped frequency-doubled Nd:YAG laser, emitting a wavelength of 532nm. The laser source is required to provide a coherence length of the order of millimetres, such that a useful spackle pattern of radiation is produced at the detector. The wavelength should be chosen to be consistent with the transmission window of the optical element in the arrangement and also consistent with the spectral response of the detector.

The first and second axes are preferably orientated at an angle less than $5^0$, more preferably less than $2^0$ and further preferably substantially $1^0$.

In accordance with a second aspect of the present invention, there is provided an optical surface roughness measuring arrangement for measuring the surface roughness of a material, the arrangement comprising:

- the optical surface roughness measurement-enabling arrangement of the first aspect; and,

- a processor for processing the detected radiation to provide a measurement of the surface roughness.

Preferred features of the measuring arrangement of the second aspect may comprise one or more of the preferred features of the measurement-enabling arrangement of the first aspect.

In accordance with a third aspect of the present invention, there is provide a method of enabling a measurement of the surface roughness of a material, the method comprising the steps of:

- illuminating the surface of the material with a beam of radiation directed along a first axis;

- refracting the beam of radiation directed along the first axis, using a refractive optical element, along a second axis which is non-parallel with the first axis, so that the surface of the material becomes illuminated with a beam of radiation directed along the second axis; and,

- detecting the radiation, incident upon the surface along the first axis and second axis, which becomes reflected off the surface of the material.

In accordance with a fourth aspect of the present invention, there is provided a method of measuring the surface roughness of a material, the method comprising the steps of the method enabling the measurement of the surface roughness of a material according to the third aspect and subsequently processing the detected radiation to provide a measurement of the surface roughness.

In an embodiment, the processing of the detected radiation comprises correlating the radiation reflected from the surface from the first axis with the radiation reflected from the surface from the second axis.

Embodiments of the present invention will now be described by way of an example only and with reference to the accompanying drawings, in which:

Figure 1 is a schematic illustration of a known arrangement for enabling the measurement of the surface roughness of a material;

Figure 2a is a schematic illustration of an optical surface roughness measurement-enabling arrangement for enabling measurement of the surface roughness of a material according to an embodiment of the present invention, with the refractive optical element optically aligned with the radiation source;

Figure 2b is a schematic illustration of an optical surface roughness measuring arrangement for measuring the surface roughness of a material with the refractive optical element optically aligned with the radiation source, according to an embodiment of the present invention;

Figure 3a is a flowchart illustrating the sequence of steps associated with a method of enabling the measurement of the surface roughness of a material according to an embodiment of the present invention; and,

Figure 3b is a flowchart illustrating the sequence of steps associated with a method of measuring the surface roughness of a material according to an embodiment of the present invention.

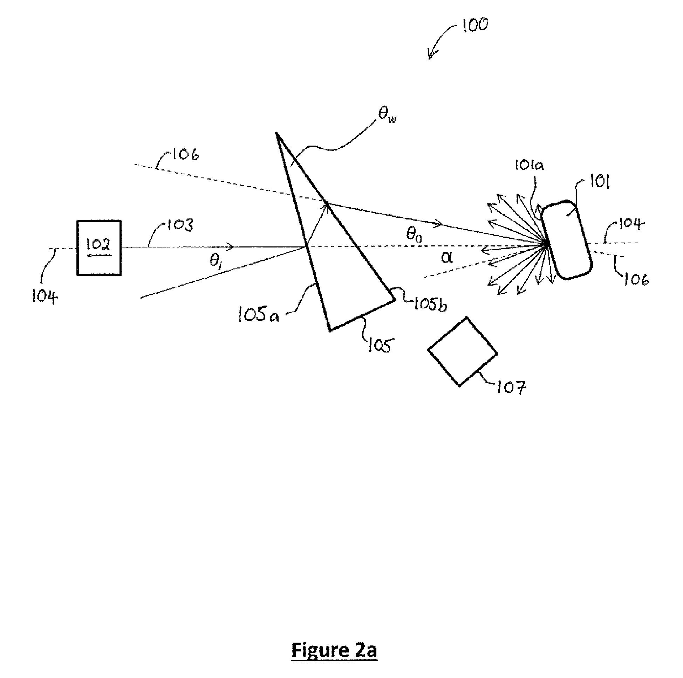

Referring to figure 2a of the drawings, there is illustrated an optical surface roughness measurement-enabling arrangement 100 for enabling measurement of the surface roughness of a material 101 according to an embodiment of the present invention. The arrangement 100 comprises a source of radiation 102, such as a laser source, which is arranged to generate a collimated beam of radiation 103 along a first axis 104, for illuminating the surface of the material with radiation directed along the first axis 102. Typically, the first axis will comprise a non-zero angle ($\alpha$) of incidence with the surface of the material. The arrangement 100 further comprises a refractive optical element 105 optically alignable with the radiation source 102 along the first axis 104, for refracting the radiation incident thereon, along a second axis 106.

The refractive optical element 105 is arranged to selectively refract the beam 103 incident thereon such that the beam 103 refracted (shown exaggerated in figure 2a) exits the element 105 and propagates along a second axis 106 which is non-parallel with the first axis 104, but which converges toward the first axis 104 in a direction which is away from the element 105 toward the material 101. In order to achieve this, the front and rear surfaces 105a, 105b of the element 105 are substantially planar and are orientated at an acute angle with respect to each other, such that the element 105 comprises an optical prism or wedge. The radiation exiting the element 105 along the second axis 106 is also used to illuminate the surface 101a of the material 101 and at least a portion of the radiation reflected from the surface 101a is captured by a detector 107 for enabling a subsequent measurement of the surface roughness of the material 101.

The angular orientation of the second axis 106 relative to the first axis 103, namely $\theta_0$, is determined according to the relationship:

$$\theta_o = arcsin\left[ sin\theta_i cos\theta_w - n\left( 1 - \left(\frac{sin^2\theta_i}{n^2}\right)\right)^{0.5} sin\theta_w \right] + \theta_w - \theta_i$$

where $\theta_i$ is the angle at which the beam 103 is incident upon the front surface 105a of the optical element 105, $\theta_w$ is the angle between the front and rear surface 105a, 105b of the element 105, and $n$ is the refractive index of the element 105. Using this relationship, a particular angular orientation may be determined by incorporating the appropriate prism and illuminating the prism at the appropriate angle of incidence. The angular orientation is typically chosen to be less than $5^0$, and in an embodiment, this orientation is preferably less than $2^0$ and more preferably substantially of the order of $1^0$. It is thus evident that the arrangement 100 provides for at least an improved lower limit to the angular orientation compared with existing optical arrangements, and is independent of the physical size of components of the arrangement 100

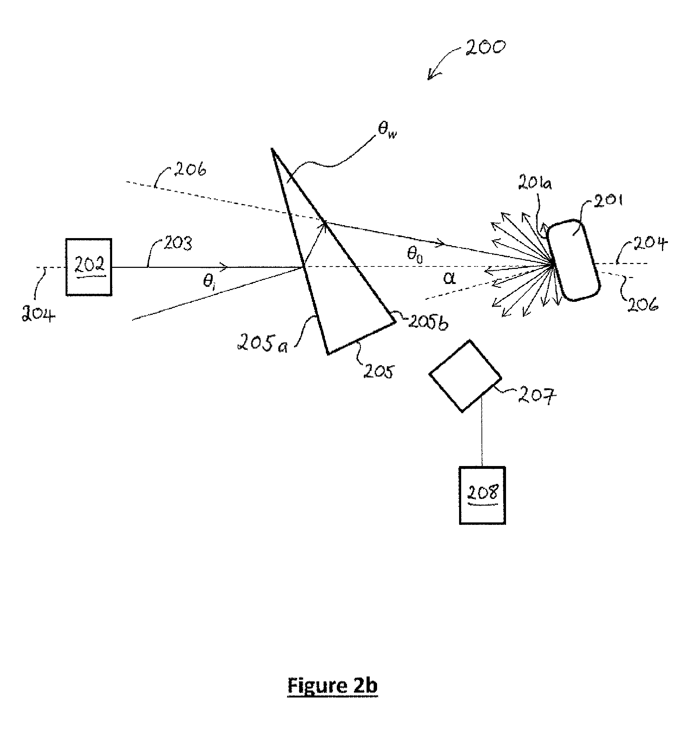

Referring to figure 2b of the drawings, there is illustrated an optical surface roughness measuring arrangement 200 for providing a measurement of the surface roughness of a material 201. The measuring arrangement 200 comprises the measurement-enabling arrangement 100 described above and as such, similar features have been referenced using the same numerals, but increased by 100.

The measuring arrangement 200 further comprises a processor 208 communicatively coupled with the detector 207, which is arranged to process the radiation captured by the detector 207 to generate a value for the surface roughness.

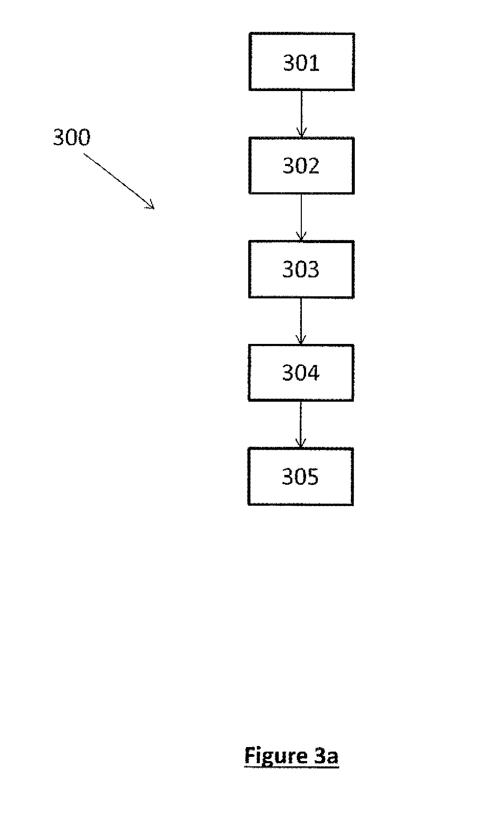

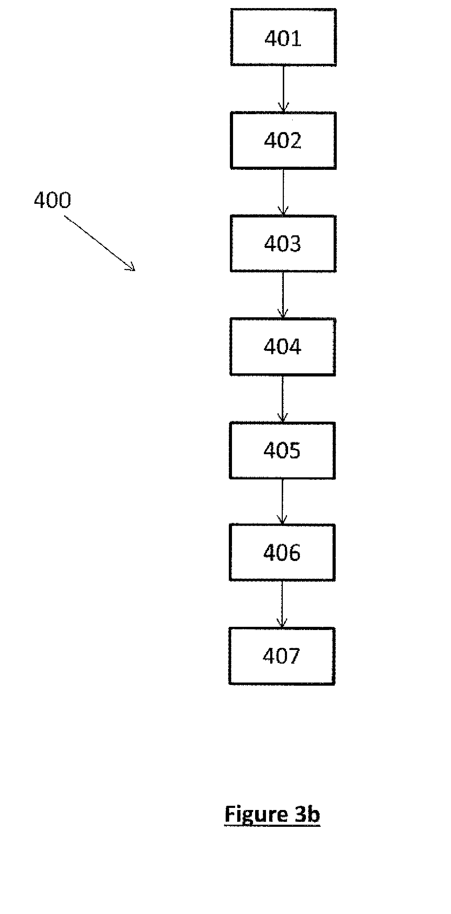

Referring to figure 3a of the drawings, there is illustrated a method 300 of enabling the measurement of the surface roughness of a material 101 according to an embodiment of the present invention. The method 300 comprises illuminating the surface of the material at step 301, with a beam of radiation directed along a first axis and capturing at least a portion of the radiation reflected off the surface 101a at a detector 107, at step 302.

The method further comprises aligning a refractive optical element within the first axis at step 303, between the radiation source and the material, to cause the beam to become refracted along a second axis 106 at step 304, which is non-parallel with the first axis 104 and subsequently capturing the radiation reflected off the surface 101a at a detector 107 at step 305.

In a further embodiment of the present invention there is provided a method 400 of measuring the surface roughness of a material 201, the method 400 comprises the method 300 of enabling the measurement, as described above, and as such similar steps have been referenced with the same numerals but increased by 100. The method 400 of the further embodiment comprises the additional step of processing the detected radiation using a processor 208 at step 406 to generate a correlation value or coefficient, between the two sets of detected radiation, using a convolution algorithm.

The correlation coefficient $C$ can be expressed in terms of the surface roughness parameter $Rq$, the wavenumber $k$ ($=2\pi/\lambda$), the difference in incident angle $\delta\alpha$, namely the angular separation of the first and second axis 104, 106, and the absolute angle of incidence $\alpha$ (this being the angle of incidence to the material surface). Accordingly, once the correlation coefficient has been determined at step 406, a measurement of the surface roughness $Rq$ can be determined using the processor 208 at step 407, using the following relationship:

$$C = exp\left( -\left(R_q k \delta\alpha \sin\alpha\right)^2 \right)$$

From the foregoing therefore it is evident that the above described arrangements and methods provide for an improved determination the surface roughness measurement of materials.

**Claims**

1. An optical surface roughness measurement-enabling arrangement for enabling measurement of the surface roughness of a material, the arrangement comprising:

   - an optical radiation source for generating a beam of collimated radiation and directing the beam along a first axis for illuminating the surface of the material;
   - a refractive optical element optically alignable with the beam of radiation for refracting the beam and directing the refracted beam along a second axis which is non-parallel with the first axis, for illuminating the surface of the material;
   - a detector which is arranged to detect the radiation, incident upon the surface along the first axis and second axis, which becomes reflected off the surface of the material.

2. A measurement-enabling arrangement according to claim 1, wherein the refractive optical element comprises a front and rear substantially planar optical surface through which the beam of radiation is arranged to pass, the front and rear surface being orientated at an acute angle to each other.

3. A measurement-enabling arrangement according to claim 1 or 2, wherein the refractive optical element comprises an optical wedge.

4. A measurement-enabling arrangement according to claim 1 or 2, wherein the refractive optical element comprises a prism.

5. A measurement-enabling arrangement according to any preceding claim, wherein the optical radiation source comprises a source of laser radiation.

6. A measurement-enabling arrangement according to any preceding claim, wherein the first and second axes are orientated at an angle less than $5^0$.

7. A measurement enabling arrangement according to any preceding claim, wherein the first and second axes are orientated at an angle less than $2^0$.

8. A measurement-enabling arrangement according to any preceding claim, wherein the first and second axes are orientated at an angle of substantially $1^0$.

9. An optical surface roughness measuring arrangement for measuring the surface roughness of a material, the arrangement comprising:

   - the optical surface roughness measurement-enabling arrangement of any preceding claim; and,
   - a processor for processing the detected radiation to provide a measurement of the surface roughness.

10. A method of enabling a measurement of the surface roughness of a material, the method comprising the steps of:

    - illuminating the surface of the material with a beam of radiation directed along a first axis;
    - refracting the beam of radiation directed along the first axis, using a refractive optical element, along a second axis which is non-parallel with the first axis, so that the surface of the material becomes illuminated with a beam of radiation directed along the second axis; and,
    - detecting the radiation, incident upon the surface along the first axis and second axis, which becomes reflected off the surface of the material.

11. A method of measuring the surface roughness of a material, the method comprising the steps of the method enabling the measurement of the surface roughness of a material according to claim 10 and subsequently processing the detected radiation to provide a measurement of the surface roughness.

12. A method of measuring the surface roughness of a material according to claim 11, wherein the processing of the detected radiation comprises correlating the radiation reflected from the surface from the first axis with the radiation reflected from the surface from the second axis.

**Figure 1**
**(Prior Art)**

**Figure 2a**

**Figure 2b**

300

301

302

303

304

305

**Figure 3a**

400

```
┌─────────┐
│   401   │
└─────────┘
     │
     ▼
┌─────────┐
│   402   │
└─────────┘
     │
     ▼
┌─────────┐
│   403   │
└─────────┘
     │
     ▼
┌─────────┐
│   404   │
└─────────┘
     │
     ▼
┌─────────┐
│   405   │
└─────────┘
     │
     ▼
┌─────────┐
│   406   │
└─────────┘
     │
     ▼
┌─────────┐
│   407   │
└─────────┘
```

**Figure 3b**

Europäisches
Patentamt

European
Patent Office

Office européen
des brevets

**EUROPEAN SEARCH REPORT**

Application Number

EP 13 27 5206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VINCENT LORIETTE ET AL: "Point defect 3D mapping in thick transparent substrates", JOURNAL OF OPTICS. A, PURE AND APPLIED OPTICS, INSTITUTE OF PHYSICS PUBLISHING, BRISTOL, GB, vol. 2, no. 2, 1 March 2000 (2000-03-01), pages 70-76, XP020080608, ISSN: 1464-4258, DOI: 10.1088/1464-4258/2/2/302 * the whole document * | 1-12 | INV. G01B11/30 |
| X | EP 0 066 030 A1 (IBM DEUTSCHLAND [DE]; IBM [US]) 8 December 1982 (1982-12-08) * abstract; figure 2 * * page 12 - page 13 * | 1-12 | |
| A | US 4 889 998 A (HAYANO FUMINORI [JP] ET AL) 26 December 1989 (1989-12-26) * the whole document * | 1-12 | |
| A | DE 10 2011 118607 A1 (UNIV SCHILLER JENA [DE]; FRAUNHOFER GES FORSCHUNG [DE]) 14 March 2013 (2013-03-14) * the whole document * | 1-12 | TECHNICAL FIELDS SEARCHED (IPC) G01B |

The present search report has been drawn up for all claims

| Place of search | Date of completion of the search | Examiner |
|---|---|---|
| Munich | 29 October 2013 | Stanciu, C |

EPO FORM 1503 03.82 (P04C01)

**ANNEX TO THE EUROPEAN SEARCH REPORT
ON EUROPEAN PATENT APPLICATION NO.**                    EP 13 27 5206

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2013

| Patent document cited in search report | Publication date | Patent family member(s) | Publication date |
|---|---|---|---|
| EP 0066030 A1 | 08-12-1982 | DE 3175207 D1<br>EP 0066030 A1<br>JP S57200808 A | 02-10-1986<br>08-12-1982<br>09-12-1982 |
| US 4889998 A | 26-12-1989 | US 4889998 A<br>US 4999510 A | 26-12-1989<br>12-03-1991 |
| DE 102011118607 A1 | 14-03-2013 | DE 102011118607 A1<br>WO 2013037833 A1 | 14-03-2013<br>21-03-2013 |

EPO FORM P0459

For more details about this annex : see Official Journal of the European Patent Office, No. 12/82